# EUROPEAN PATENT APPLICATION

(11) **EP 2 878 422 A1**
(43) Date of publication of application: **03.06.2015**
(21) Application number: 13816661.6
(22) Date of filing: 20.06.2013
(51) Int. Cl.: B29C 47/14, B29C 47/36

(54) **METHOD FOR FORMING LONG SHEETS OUT OF PLASTICIZED MATERIALS AND A DEVICE FOR IMPLEMENTING SAME**

(30) Priority: 13.07.2012 RU 2012129689
(71) Applicant: Gubenko, Lev Anatolyevich, Moscow 121002 (RU); Perelman, Vladimir Evseevich, 119571 Moscow (RU)
(72) Inventor: Gubenko, Lev Anatolyevich, Moscow 121002 (RU); Perelman, Vladimir Evseevich, 119571 Moscow (RU)
(74) Representative: Einsel, Martin
(86) International application number: PCT/RU2013/000522
(87) International publication number: WO 2014/011080

(57) **Abstract**

The group of inventions relates to the production of long products out of powdered plasticized masses by means of the extrusion thereof. The technical result of the invention consists in making it possible to form long sheets out of plasticized materials, said sheets being uniform in structure and without defects. The method for forming long sheets out of plasticized powdered materials comprises: forming a blank, pressing it through a deformation channel having a round cross section at the inlet thereof and a rectangular cross section at the outlet thereof thus providing for the stretching of the material, then forming the product and calibrating same. In the process of pressing the material through the deformation channel, deformation zones are formed in said material. In the first half of the length of the deformation channel, the degree of deformation of the material in the central zone is no less than 80%, while in the peripheral zones it is no more than 20% of the overall degree of deformation undergone by the material throughout the entire length of the deformation channel. In the second half of the length of the deformation channel, at the same time as the material moves along the axis of the channel, thus decreasing the width and height of the peripheral zones, the volume of material in these zones is also decreased relative to the volume of material in the central zone by means of pressing said material back into the central zone. The device for carrying out said method comprises all the necessary deformation elements with a shaped working channel and a calibrating drawing die.

## Description

The group of inventions relates to production of long products out of powdered plasticized masses by means of extrusion thereof.

There are known methods and devices for obtaining long sheets out of molten masses of polymeric materials with extrusion presses. For example, it is known an extrusion die head for an extrusion press to manufacture a thermoplastic band, having a screw channel with a round inlet opening and a slotted calibrating outlet opening. The screw channel surface has an entry cone, an intermediate zone and a calibrating zone, the intermediate zone containing storing sections in the form of cone-shaped surfaces presenting lower cone angle in the vertex. The method carried out by this device comprises: forming a blank and pressing it through a deformation channel having a round cross section at the inlet and a slotted cross section at the outlet thus providing for stretching of the material, then forming the product and calibrating the same. The storing sections provide for formation of a zone with a higher density of material enabling shape stability of the product to be extruded (see, for example, RU94025660 A1, published on 20.05.1996).

Liquid state of the molten polymeric material enables not to apprehend any discontinuity of same, even at high gradients of material flow rate in the deformation channel, as well as in the case of extrusion methods using the feed of materials via separate channels to various zones of the deformation channel, it enables to obtain, while said separate flows blend, a defectless and homogenous mass on the surface of their contact.

These properties of liquid media do not characterize moldable or viscous moldable media that include solid and plasticized materials, which does not enable to use the solutions usable in the processing of molten materials for the manufacture of long sheets out of powdered plasticized materials.

The purpose of the present invention consists in making it possible to form long sheets out of powdered plasticized materials, said sheets being uniform in structure and without defects.

The technical result achieved by the invention is to provide such a material deformation degree that is equal in the whole volume of the product and to provide the same linear flow rate of the material to be deformed from the deformation channel, which enables to obtain uniform structure without defects in the whole volume of the product formed.

Said technical result is achieved thanks to the fact that in method for forming long sheets out of powdered plasticized materials, comprising the steps of forming a blank and pressing it through a deformation channel having a round cross section at the inlet thereof and a rectangular cross section at the outlet thereof thus providing for stretching the material, then forming the product and calibrating the same, according to the proposal, in the process of pressing the material through the deformation channel, deformation zones are formed in said material with the central zone abutting upon the vertical symmetry plane of the deformation channel and two peripheral zones on both sides of the central zone. In this case, in the first half of the length of the deformation channel, deformation degree of the material in the central zone is not less than 80%, while in the peripheral zones it is not more than 20% of the overall degree of deformation undergone by the material throughout the entire length of the deformation channel. In the second half of the length of the deformation channel, at the same time as the material moves along the axis of the channel, thus decreasing the width and height of the peripheral zones, the volume of material in these zones is also decreased relative to the volume of the material in the central zone by means of pressing said material back into the central zone.

In a particular embodiment, in the process of forming materials the mechanical characteristics of which depend on temperature, while pressing the material through, it is submitted to the effect of a temperature pattern that is non-uniform and symmetric relative to the axis of stretching, where the temperature decreases in the direction from the deformation channel inlet to the outlet of the same and increases from the vertical symmetry plane to the periphery.

The technical result is achieved as well thanks to a device for forming long sheets out of powdered plasticized materials, comprising a deformation element with a profiled deformation channel the outlet portion of which is made as a calibrating die and profiled surface of which has horizontal and vertical symmetry **planes** the line of intersection of which represents the axis of the channel, and the profiled surface has an inlet opening of round shape and a rectangular calibrating opening. Furthermore, the profiled surface is modified from the round-shape cross section orthogonal to the channel axis at the inlet opening to a rectangular cross section **orthogonal to the channel axis** at the calibrating opening through the convexo-concave closed outlines in which the curves having different signs of curvature conjugate to each other tangentially, and each of lines of intersection of the vertical symmetry plane with the profiled surface of the deformation channel comprises a convexo-concave portion crossing concave elements of said closed outlines, and a rectilinear portion abutting upon the same from a concave side, which is parallel to the channel axis. In this case, the distance between the rectilinear portions of both lines is constant and equal to the height of the rectangular calibration opening, and the convexo-concave portions of both lines start to be transformed to rectilinear ones at the same section where, in the center of the concave elements of said convexo-concave closed outlines, the concave elements start to be transformed tangentially to rectilinear segments the length of which grows along the length of the deformation channel and at the outlet of the same it is equal to the width of the rectangular calibration opening. Each of the intersection lines of the horizontal symmetry plane with the profiled surface of the deformation channel consists of two portions having different signs of curvature and crosses the convex elements of said closed outlines the portions of which that abut upon the horizontal symmetry **plane** are transformed, at the deformation channel outlet, into rectilinear fragments parallel to the vertical symmetry plane and the maximum length of which is equal to the height of the rectangular calibration opening.

In a particular embodiment, when the width of the calibration opening is more than the inlet opening diameter, the lines formed by the intersection of the profiled surface of the deformation channel with the horizontal plane of symmetry and composed of two portions of a different sign of curvature are concavo-convex comprising a concave portion abutting upon the inlet opening, and a convex portion abutting upon the calibration opening.

In another particular embodiment, when the width of the calibration opening is less than the inlet opening diameter, the lines formed by the intersection of the profiled surface of the deformation channel with the horizontal plane of symmetry and composed of two portions of a different sign of curvature are convexo-concave comprising a convex portion abutting upon the inlet opening, and a concave portion abutting upon the calibration opening.

Furthermore, while forming materials mechanical characteristics of which depend on temperature, the deformation element is made with walls having 6 to 10 channels symmetric to the deformation channel axis and presenting independent inlets and outlets designed to provide circulation of a liquid or a gas.

The invention is illustrated by drawings.
Fig. 1 shows a profiled surface of the deformation channel in a device of the present invention.
Fig. 2 (a to h) shows cross sections of the profiled surface of the deformation channel successively from the round-shaped inlet opening (a) to the rectangular shape outlet opening (h).
Fig. 3 shows lines of intersection of the deformation channel profiled surface with the vertical symmetry plane.
Fig. 4 shows lines of intersection of the deformation channel profiled surface with the horizontal symmetry plane.
Fig. 5 shows a curve of variation of the cross section area s for the peripheral zones of the channel along the length I of same.
Figs. 6 and 7 show photos of long sheets manufactured with the help of the method and the device according to the present invention.

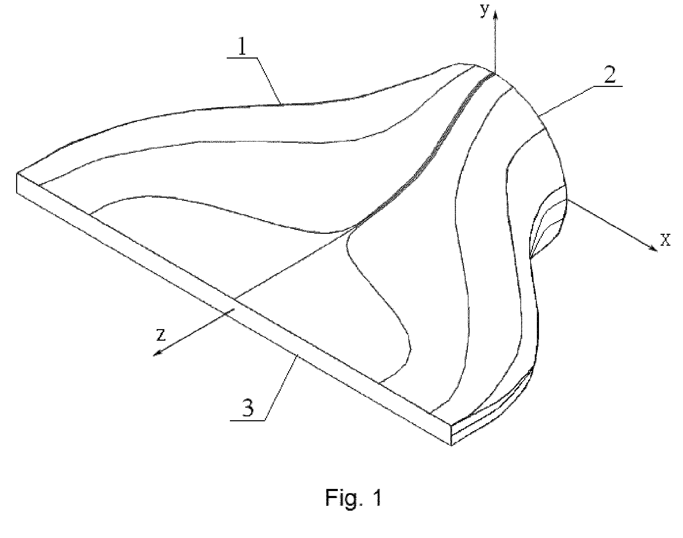

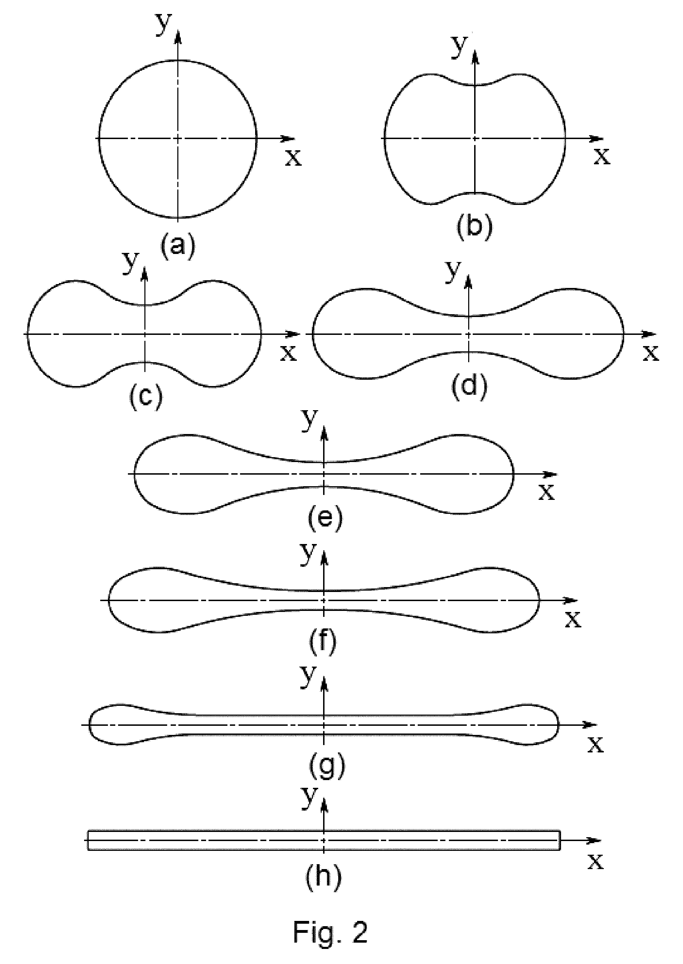

The device for forming long sheets out of powdered plasticized materials comprises a deformation element abutting upon the extruder press having a profiled surface 1 in the deformation channel. As shown in Fig. 1, the profiled surface 1 of the deformation channel presents a horizontal and vertical symmetry **planes** the line of intersection of which is the channel axis (axis **z**) and has as well a round-shaped inlet opening 2 and a rectangular calibration opening 3. In this case, the profiled surface 1 passes from a round section of the inlet opening 2 to a rectangular section of the calibration opening 3 via convexo-concave surfaces. In the sections orthogonal to the channel axis, these surfaces form, according to Fig. 2, closed outlines in which the curves having different signs of curvature are abutted to each other tangentially.

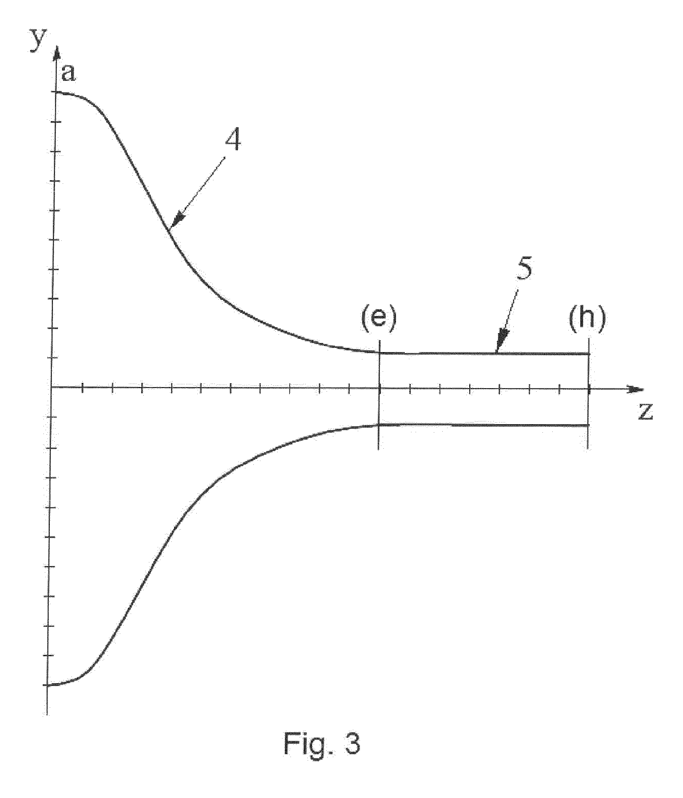

The lines of intersection of the vertical symmetry plane (plane **y-z**) with the profiled surface 1 of the deformation channel, shown in Fig. 3, pass across the centers of the concave elements in the closed outlines shown in Fig. 2, and include a convexo-concave portion 4 and a rectilinear portion 5 abutting upon the last at the concave side and parallel to the channel axis (axis **z**). The distances along the axis **y** between the rectilinear portions 5 of both lines are constant and equal to the height of the calibration opening 3.

Starting from the section ***e*** where the convexo-concave lines 4 shown in Fig. 3 pass into fragments of straight lines 5 parallel to the axis of the deformation channel in the center of concave elements making part of the convexo-concave closed outlines shown in Fig. 2, the concave elements start to pass tangentially into the segments 6 of straight lines (Fig. 2e), the distance between the same along the axis **y**, respectively, being equal to the height of the calibration opening 3, and the length of same along the length of the deformation channel grows and, at the outlet from the last, is equal to the width of the rectangular calibration opening 3.

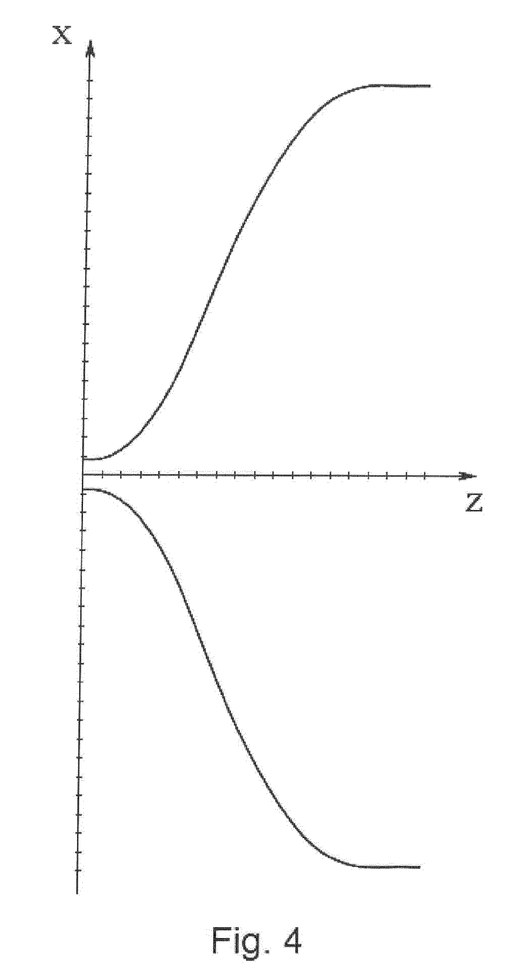

One of the shape variants for the lines of intersection of the horizontal symmetry plane (plane **x-z**) with the profiled surface of the deformation channel is shown in Fig. 4. Each of these lines passes across the centers of the convex elements in the closed outlines shown in Fig. 2, and is composed of two portions having different signs of curvature. At the outlet from the deformation channel, the distance between these lines along the axis **x** is equal to the width of the calibration channel.

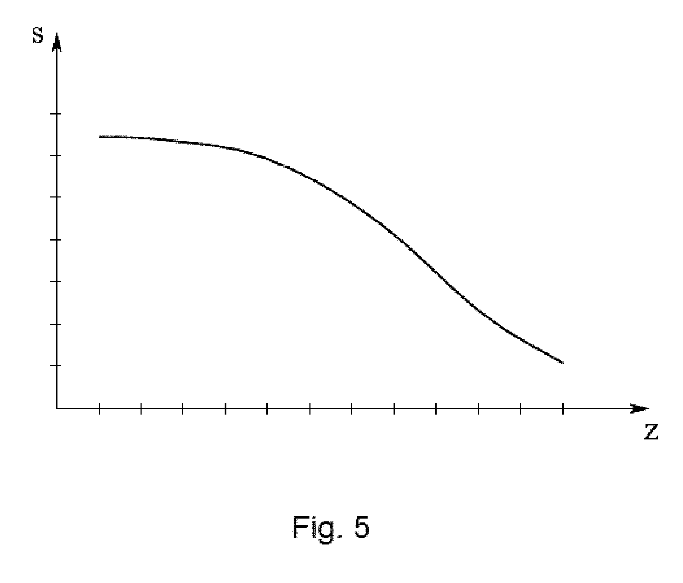

The particularities of the profiled surface 1 geometry in the deformation channel provide for the implementing of the method of the present invention for forming long sheets out of plasticized materials. The round-shaped blank pressed through the deformation channel 1, while passing via the deformation channel 1 of the device, obtains at the outlet the shape of a rectangle with a high relation of sizes in the horizontal and vertical symmetry planes. In particular, the material from the central zone abutting upon the central symmetry plane (plane **y-z**), pressed through the deformation channel undergoes, due to a fast decrease in said zone, as shown in Figs. 2 and 3, of the deformation channel section area in the first half of the length of the deformation channel 1 during the direct extrusion procedure, at least 80% of the whole stretching degree of the material in the whole length of the deformation site. Such intensive deformation processing of the material in said zone builds a high compression stress in the same, said compression stress extruding the material, by the principle of direct extrusion, in the direction orthogonal to the extrusion axis into two convex peripheral zones of the deformation channel, shown in Fig. 2 and abutting upon the central zone. Such movement of the material is the consequence of the fact that the extrusion pressures and, respectively, the compression stresses in the material of peripheral zones will be lower of no more than 20%, since the section area in the first half of the length of the deformation channel, as shown in Fig. 5, which corresponds to the stretching degree of the material in these zones. In these zones, the material undergoes an additional deformation processing thanks to the upsetting (compression) deformation of the material in the directions orthogonal to the horizontal symmetry plane of the deformation channel (plane **x-z**), which is followed by an increase of the width of the peripheral zones along the horizontal symmetry plane in the case of a low decrease of the section areas of said zones in the planes orthogonal to the axis of upsetting.

High losses of the pressure for extruding the material from the central zone in the first half of the deformation channel length, due to high degrees of stretching of the same at that portion of the deformation channel length, and low degrees of the material stretching, i.e. a low resistance to the flow of the material at that zone in the second half of the deformation channel length resulted in low values of upsetting stresses in the central zone material in the second half of the deformation channel length. Since the flow of the material along the peripheral zones in the first half of the deformation channel length was not accompanied by high losses of the material pressing-out pressure due to the low degree of stretching of the same in these zones, the compression stresses in the material of these zones at the entrance of the second half of the deformation channel length remained close to the values of pressure while pressing-out the same at the entrance of the deformation channel. Such dynamics in the variation of the compression stresses in the material of the central and peripheral zones lead to the modification of the relation between the compression stresses in the materials of these zones. A 80% and even higher decrease of the section area of the convex peripheral zones as well as of their height in the direction of the axis y to the height of the calibration opening section, as shown in Figs. 2 and 5, i.e. the increase of the deformation degree of the peripheral zones according to the principle of direct extrusion in the second half of the deformation channel length results in a high resistance to the flow of the same along the channel. And, as a consequence, it leads to the pressing out of the material to the zone of low compression stresses according to the principle of reverse extrusion from the peripheral zones to the central zone that is enlarged to the width of the extruded product in the directions orthogonal to the axis of extrusion. Such a method for processing a material by extrusion while forming long sheets out of powdered plasticized materials provides for equalizing linear rates of outflow of the material from the deformation channel through the entire width and height of the same and for a deformation processing of the material equal on the whole surface of this section.

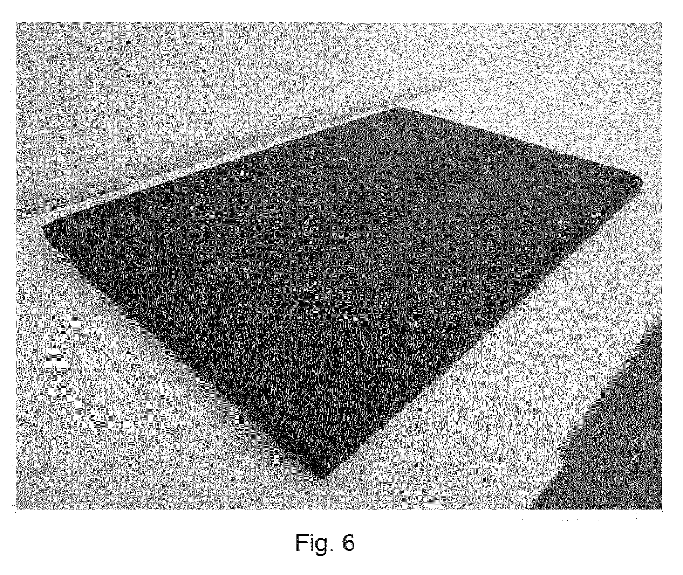

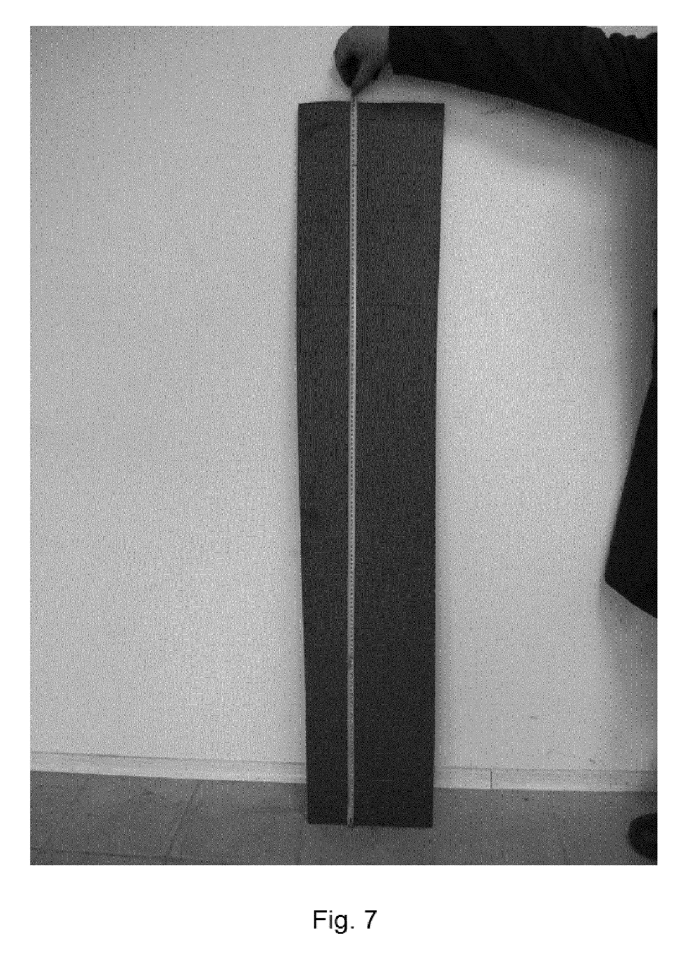

This result is confirmed by the data of density for the blanks of long sheets obtained from pitch coke compositions, the photos of which are given in Figs. 6 and 7. In particular, at 24% content of medium-temperature pitch and at particle sizes of less than 10 µm, the extruded blanks had the density of 1.76 to 1.78 g/cm³, which is practically equal to the additive density of such a composite material. Such a formed blank material density close to the compact state prevents completely all the problems related to the material inhomogeneity in products. After roasting and graphitization, the material density without additional dipping or additional processing had the values of 1.86 to 1.89 g/cm³. Figs. 6 and 7 show as well that there are no defects arising at high gradients of the linear rate of the material output from the deformation channel, and there are no gradients of this rate.

The presence of 6 to 10 channels in the deformation element of the device, designed to pump a liquid or a gas, symmetric to the channel axis and presenting independent inlets and outlets (not shown in figures) enables, while pressing the material through the deformation channel, to submit the same to the effect of a temperature pattern, heterogeneous and symmetric to the axis of stretching. It provides for equalizing, in the deformation site, limit and viscous characteristic of the material, which enables to achieve the goal foreseen by the method of formation. Such a temperature regulation in the material the mechanical characteristics of which depend on temperature is necessary because said material, already while entering the deformation channel, has unequal temperatures in the sections orthogonal to the channel axis, and this temperature distribution in the material changes when it moves along the channel due to different heat transfer on the tool surface and to the deformation degree that the material undergoes in various deformation zones, because the deformation strain turns into the temperature of heating the medium to be deformed.

## Claims

1. Method for forming long sheets out of powdered plasticized materials, comprising the steps of forming a blank and pressing it through a deformation channel having a round cross section at the inlet thereof and a rectangular cross section at the outlet thereof thus providing for stretching of the material, then forming a product and calibrating the same, whereas in the process of pressing the material through the deformation channel, deformation zones are formed in said material with a central zone abutting upon the vertical symmetry plane of the deformation channel and two peripheral zones on both sides of the central zone; in this case, in the first half of the length of the deformation channel, deformation degree of the material in the central zone is not less than 80%, while in the peripheral zones it is not more than 20% of the overall degree of deformation undergone by the material throughout the entire length of the deformation channel, and in the second half of the length of the deformation channel, at the same time as the material moves along the axis of the channel, thus simultaneously decreasing the width and height of the peripheral zones, the volume of the material in these zones is decreased relative to the volume of the material in the central zone by means of pressing said material back into the central zone.

2. The method of claim 1 wherein in the process of forming materials the mechanical characteristics of which depend on temperature, while pressing the material through, it is submitted to the effect of a temperature pattern that is non-uniform and symmetric relative to the axis of stretching, where the temperature decreases in the direction from the deformation channel inlet to the outlet of the same and increases from the vertical symmetry plane to the periphery.

3. A device for forming long sheets out of powdered plasticized materials, comprising a deformation element with a profiled deformation channel the outlet portion of which is made as a calibrating die and a profiled surface of which has horizontal and vertical symmetry **planes** the line of intersection of which represents an axis of the channel, and the profiled surface has an inlet opening of round shape and a rectangular calibrating opening, and the profiled surface is modified from the round-shaped cross section orthogonal to the channel axis at the inlet opening to a rectangular cross section **orthogonal to the channel axis** at the calibrating opening through the convexo-concave closed outlines in which the curves having different signs of curvature conjugate to each other tangentially, and each of lines of intersection of the vertical symmetry plane with the profiled surface of the deformation channel comprises a convexo-concave portion crossing concave elements of said closed outlines, and a rectilinear portion abutting upon the same from a concave side, which is parallel to the channel axis, in this case, the distance between the rectilinear portions of both lines is constant and equal to the height of the rectangular calibration opening, and the convexo-concave portions of both lines start to be transformed to rectilinear ones at the same section where, in the center of the concave elements of said convexo-concave closed outlines, the concave elements start to be transformed tangentially to straight segments the length of which grows along the length of the deformation channel and at the outlet of the same is equal to the width of the rectangular calibration opening, and each of the intersection lines of the horizontal symmetry plane with the profiled surface of the deformation channel consists of two portions having different signs of curvature and crosses the convex elements of said closed outlines the portions of which that abut upon the horizontal symmetry **plane** are transformed, at the deformation channel outlet, into straight fragments parallel to the vertical symmetry plane and the maximum length of which is equal to the height of the rectangular calibration opening.

4. Device of claim 3, wherein when the width of the calibration opening is more than the inlet opening diameter, the lines formed by the intersection of the profiled surface of the deformation channel with the horizontal plane of symmetry and composed of two portions of a different sign of curvature are concavo-convex comprising a concave portion abutting upon the inlet opening, and a convex portion abutting upon the calibration opening.

5. Device of claim 3, wherein when the width of the calibration opening is less than the inlet opening diameter, the lines formed by the intersection of the profiled surface of the deformation channel with the horizontal plane of symmetry and composed of two portions of a different sign of curvature are convexo-concave comprising a convex portion abutting upon the inlet opening, and a concave portion abutting upon the calibration opening.

6. Device of claim 3, wherein the deformation element is made with walls having 6 to 10 channels symmetric to the deformation channel axis and presenting independent inlets and outlets designed to provide circulation of a liquid or a gas.
